# FASCICULE DE BREVET EUROPEEN

(11) **EP 0 538 141 B1**
(45) Date de publication et mention de la délivrance du brevet: **28.12.1994**
(21) Numéro de dépôt: 92402840.0
(22) Date de dépôt: 16.10.1992
(51) Int. Cl.: H01S 3/094, H01S 3/23, B01D 59/34

(54) **Installation pour la formation d'un faisceau laser adapté à la séparation isotopique**
Zur Isotopen-Trennung geeignete Laserstrahlerzeugungs-Vorrichtung
Laser beam formation installation adapted for isotopic separation

(30) Priorité: 18.10.1991 FR 9112894
(43) Date de publication de la demande: 21.04.1993
(73) Titulaire: COMMISSARIAT A L'ENERGIE ATOMIQUE, 75015 Paris (FR)
(72) Inventeur: Guyot, Jean, F-78720 Cernay La Ville (FR); Pochon, Etienne, F-92140 Clamart (FR)
(74) Mandataire: Signore, Robert

(56) Documents cités:
- APPLIED OPTICS vol. 18, no. 4, Février 1979, pages 525 - 527;S.LAVI ET AL.'EFFICIENT OSCILLATOR-AMPLIFIER DYE LASER PUMPED BY A FREQUENCY-DOUBLED Nd:YAGLASER'
- PATENT ABSTRACTS OF JAPAN vol. 11, no. 182 (E-515)(2629) 11 Juin 1987 & JP-A-62 014 487
- APPLIED PHYSICS LETTERS vol. 54, no. 6, 6 Février 1989, NEW-YORK pages 496 -498 , XP000027416 B.ZYSSED ET AL. 'HIGH REPETITION RATE FEMTOSECOND DYE AMPLIFIER USING A LASER DIODE PUMPED NEODYMIUM:YAG LASER'
- PATENT ABSTRACTS OF JAPAN vol. 11, no. 343 (E-555)(2790) 10 Octobre 1987 & JP-A-62 124 784

## Description

### Domaine technique

La présente invention a pour objet une installation pour la formation d'un faisceau laser adapté à la séparation isotopique dans une vapeur atomique (procédé dit SILVA).

### Etat de la technique antérieure

La séparation isotopique par laser dans une vapeur atomique repose sur la photoionisation sélective des atomes d'uranium 235 par absorption résonnante. Ce procédé nécessite la production d'un faisceau laser aux propriétés particulières :
- il doit d'abord être polychromatique, c'est-à-dire composé de trois (ou quatre) couleurs, pour permettre l'excitation des diverses transitions impliquées dans le processus de photoionisation,
- il doit ensuite être accordable en longueur d'onde, entre environ 550 nm et 700 nm, pour permettre l'ajustement des diverses longueurs d'onde aux transitions mises en oeuvre,
- sa finesse spectrale doit être bonne et voisine de 10⁻⁶,
- il doit délivrer des impulsions de durée 50 ns environ avec une cadence de répétition de l'ordre de 10 kHz,
- enfin, sa puissance moyenne doit être de l'ordre de quelques dizaines de Watts pour des installations de laboratoire, et doit et doit pouvoir atteindre 25 kW pour une installation industrielle.

Pour atteindre de telles performances, on a construit des installations comprenant plusieurs chaînes de lasers à colorant (qui sont des lasers accordables), travaillant à des longueurs d'onde différentes. Chaque chaîne comprend un étage oscillateur et des étages amplificateurs montés en série. Chacun des étages de ces chaînes est pompé optiquement par une chaîne de lasers disposés en série, chacun de ces lasers de pompage travaillant à forte puissance moyenne (plusieurs centaines de Watts). Chaque chaîne de pompage fournit un faisceau dont la puissance moyenne est de l'ordre du kilowatt.

Les divers faisceaux émis par les diverses chaînes de pompage sont dirigés par des éléments d'optiques appropriés (miroirs, lentilles, etc.) vers les étages des lasers à colorant.

Les lasers composant les chaînes de pompage sont en général des lasers à vapeur de cuivre, qui émettent deux raies respectivement à 510 et 578 nm avec une cadence de répétition de l'ordre de 5 kHz.

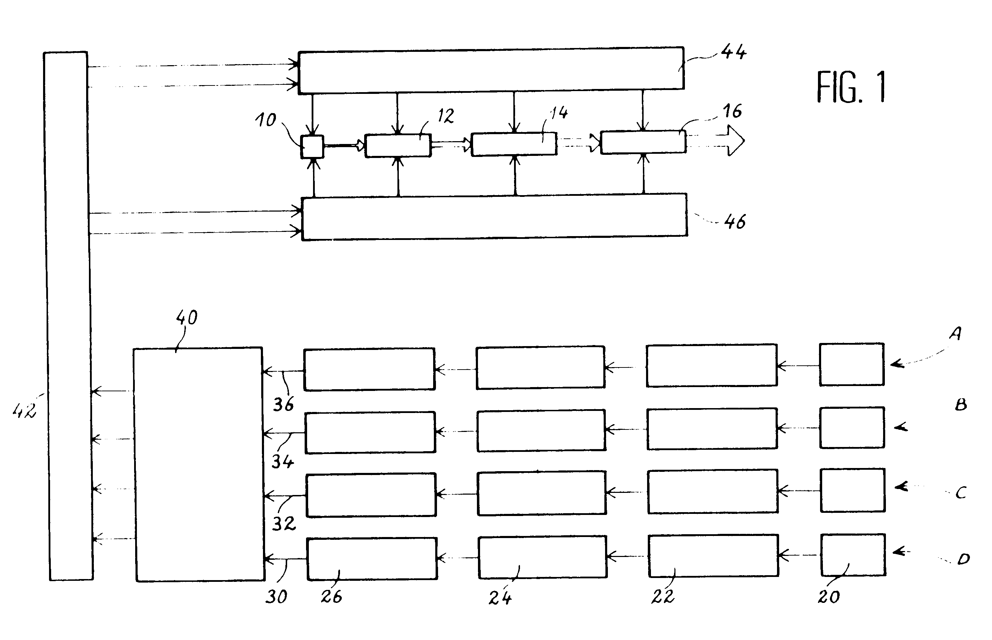

La figure 1 montre une installation selon cet art antérieur. La chaîne de lasers à colorant comprend un étage oscillateur 10 et des étages amplificateurs 12, 14, 16. Il existe autant de chaînes de ce type qu'il y a de longueurs d'onde à engendrer (par exemple quatre).

La chaîne de pompage comprend, dans l'exemple illustré, quatre chaînes A, B, C, D, chacune composée d'un oscillateur 20 et de trois amplificateurs 22, 24, 26. Les quatre faisceaux 30, 32, 34, 36 délivrés sont gérés et multiplexés dans un système 40, puis transportés par un jeu de miroirs et de lentilles pour être finalement adressés à deux systèmes 44 et 46 de distribution de faisceaux disposés de part et d'autre de la chaîne de lasers à colorant.

Il n'est pas utile de décrire ici les moyens de multiplexage en longueur d'onde des faisceaux finalement délivrés par les diverses chaînes de lasers à colorant, ni le séparateur où a lieu finalement la photoionisation sélective de l'uranium 235, car ces moyens sont bien connus et ne font de toute façon pas partie de l'invention. On pourra en trouver une description dans l'ouvrage intitulé "Le Laser-Principes et techniques d'application", coordonnateur H. MAILLET, chapitre 4 : "Séparation isotopique par laser" par M. CLERC, P. RIGNY et 0. DE WITTE (Edition Lavoisier).

Bien que donnant satisfaction à certains égards, ces installations présentent des inconvénients.

D'abord, elles sont d'un encombrement considérable en raison de l'utilisation des lasers à vapeur de cuivre qui sont des appareils de plusieurs mètres de long avec des circuits d'alimentation électriques volumineux. Cet encombrement est inhérent, en particulier, au fait que ces lasers utilisent un gaz à basse pression comme milieu actif. Ensuite, elles nécessitent de très nombreux éléments d'optique (miroirs, lentilles, etc.) pour gérer, multiplexer et diriger les divers faisceaux lumineux émis par les chaînes de pompage vers les chaînes à colorant. De ce fait, de nombreuses contraintes mécaniques apparaissent pour assurer la focalisation correcte des faisceaux de pompage dans les lasers à colorant. Ces contraintes mécaniques sont d'autant plus sévères que les deux sous-systèmes, à savoir celui de la chaîne à colorant (en haut sur la figure 1) et celui de la chaîne de pompage (en bas sur la figure 1) sont, dans la pratique, très éloignés l'un de l'autre et le plus souvent disposés dans des locaux, voire dans des bâtiments distincts, du fait des technologies très différentes mises en oeuvre.

Enfin, l'augmentation de puissance moyenne, toujours souhaitable lorsqu'on veut atteindre la dimension industrielle, pose de réels problèmes du fait de phénomènes limitatifs en puissance apparaissant dans les chaînes de pompage, liés aux performances des optiques (seuil de tenue au flux et pertes en ligne) et à la saturation du milieu.

### Exposé de l'invention

La présente invention a justement pour but de remédier à ces inconvénients. A cette fin, elle propose une installation qui rompt avec l'architecture traditionnelle et en propose une autre, qui supprime tout problème mécanique entre les chaînes de pompage et les chaînes à colorant, qui réduit de manière très importante le nombre d'éléments d'optique mis en jeu, qui conduit à une plus grande compacité, un meilleur rendement et une fiabilité plus élevée et qui, enfin, conduit à une réduction du coût par Watt produit.

Tous ces résultats sont atteints en substituant aux chaînes de pompage de l'art antérieur une pluralité de lasers à matrice solide, tous ces lasers fonctionnant en parallèle. Pour l'application envisagée à la séparation isotopique, ces lasers fonctionnent en régime d'impulsions de durée inférieure à 100 ns, à une cadence de répétition comprise entre quelques kilohertz et quelques dizaines de kilohertz, à une longueur d'onde située dans le visible et à une puissance moyenne de quelques dizaines de Watts à une centaine. Des fibres optiques sont en outre prévues pour guider la lumière émise par ces lasers vers les différents étages de la ou des chaîne(s) de lasers à colorant, chaque étage étant ainsi pompé par la lumière provenant de plusieurs lasers à matrice solide.

Une telle installation rompt donc avec l'art antérieur non seulement par le remplacement des lasers à gaz à vapeur de cuivre par des lasers à solide, mais aussi et surtout par le remplacement d'une architecture de type série par une architecture de type parallèle.

Par ailleurs, elle permet d'utiliser des sources laser de faible puissance moyenne (quelques dizaines de Watts) pour pomper optiquement des chaînes lasers à colorant de forte puissance moyenne (de l'ordre du kilowatt).

De plus, grâce à l'invention, tous les lasers de pompage deviennent identiques, ce qui leur confère un caractère modulaire, alors que, dans l'art antérieur, il y avait des lasers oscillateurs et des étages amplificateurs différents.

Les avantages annoncés sont bien obtenus. Tout d'abord, grâce à leur compacité, les lasers à solide peuvent être placés à proximité immédiate des lasers à colorant dont ils doivent assurer le pompage. Par ailleurs, l'utilisation de fibres optiques supprime tout élément optique du genre miroir ou lentille. En outre, la faible puissance moyenne émise par les lasers à solide est parfaitement compatible avec la propagation en fibre optique. Ces fibres peuvent avoir un diamètre de 400 à 1000 µm. Enfin, le caractère modulaire des lasers de pompage autorise des fabrications en grande série, apte à diminuer les coûts.

Pour illustrer l'abaissement des coûts résultant des plus grandes séries à réaliser, on peut indiquer qu'une usine de séparation isotopique travaillant avec une puissance optique de 25 kW accordable nécessite une puissance de pompage de 150 à 250 kW. Avec des lasers à vapeur de cuivre d'une puissance unitaire de 500 W, il faudrait 300 à 500 modules laser à vapeur de cuivre.

Avec l'architecture de l'invention utilisant des lasers à solide délivrant 30 à 50 W de puissance moyenne, il faudra environ 5000 modules, soit 10 fois plus.

De préférence, chaque laser à matrice solide est un laser de type YAG dopé au néodyme, muni de moyens pour doubler la fréquence d'émission. Ces moyens peuvent être constitués par un cristal doubleur placé dans la cavité du laser, notamment un cristal en KTP. La longueur d'onde d'émission est alors de 530 nm.

Les lasers YAG dopés au néodyme peuvent être pompés par une lampe à décharge ou par des diodes lasers fonctionnant de manière continue ou impulsionnelle.

De préférence encore, chaque laser YAG dopé au néodyme comprend des moyens de déclenchement ("Q-switch" en terminologie anglosaxonne). Il peut s'agir d'un modulateur acousto-optique ou électro-optique. Ces moyens permettent d'obtenir des impulsions de durée inférieure à 100 ns.

### Brève description des dessins

- la figure 1, déjà décrite, illustre une installation selon l'art antérieur ;
- la figure 2 montre schématiquement une installation selon l'invention ;
- la figure 3 montre un détail d'une veine à colorant pompée par des fibres optiques ;
- la figure 4 montre un détail du couplage optique entre les fibres et la veine de liquide à pomper.

### Exposé détaillé d'un mode de réalisation

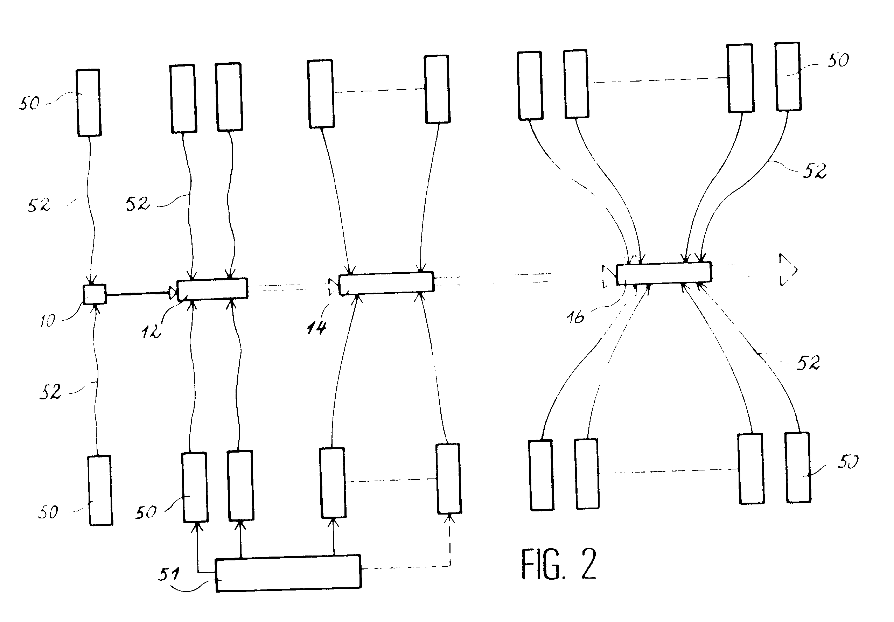

Sur la figure 2, on voit une installation conforme à l'invention. Telle que représentée cette installation comprend, comme dans l'art antérieur, diverses chaînes de lasers accordables, qui sont, en pratique, des lasers à colorant. Une seule chaîne est représentée sur la figure 2 avec un étage oscillateur 10 et des étages amplificateurs 12, 14, 16.

Selon l'invention, chacun de ces étages (oscillateur ou amplificateurs) est pompé par plusieurs lasers à matrice solide référencés 50, par exemple des lasers à YAG dopé au néodyme, doublés en fréquence et déclenchés. Les moyens de commande de ces divers lasers à matrice solide sont symbolisés par le bloc 51.

La sortie de chacun de ces lasers 50 à matrice solide est couplée à une fibre optique laquelle guide le faisceau lumineux émis jusqu'à l'étage à pomper.

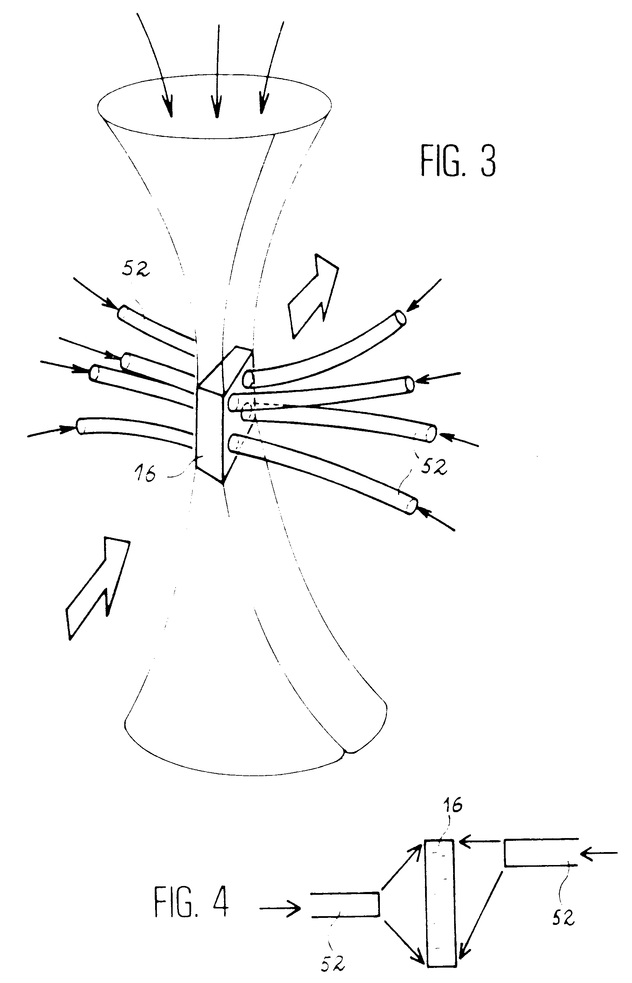

De préférence, ces fibres optiques se répartissent en deux groupes débouchant de part et d'autre de la veine liquide à pomper, comme on le voit mieux sur la figure 3. Sur cette figure on a représenté, pour plus de clarté, seulement quatre fibres optiques 52 de chaque côté d'une veine 16 à pomper, mais dans la pratique, il peut y en avoir bien davantage. Le nombre de fibres optiques associées à un étage croît d'ailleurs au fur et à mesure que l'on descend dans la chaîne des lasers à colorant, à partir de l'oscillateur 10.

Lorsque la fréquence de répétition des impulsions accordables en longueur d'onde doit être élevée, et lorsque les lasers à solide ne peuvent délivrer des impulsions de pompage à une telle fréquence, les lasers à solide correspondant à une même veine à pomper sont déclenchés de manière multiplexée (par décalage de l'instant de leur déclenchement). Les impulsions lumineuses délivrées par ces lasers se trouvent alors multiplexées dans le temps. Par exemple, quatre lasers YAG déclenchés travaillant chacun à 5 kHz peuvent engendrer un train d'impulsions à 20 kHz, s'ils sont déclenchés les uns par rapport aux autres avec 50 µs de décalage.

Chaque fibre doit alors être couplée optiquement à la totalité de la veine à pomper. C'est ce qui est représenté sur la figure 4 où l'on voit une veine 16 en vue de dessus et deux fibres 52, l'une située au bord de la veine et l'autre au centre, toutes deux illuminant la totalité de la veine. Ce couplage est obtenu en munissant l'extrémité des fibres de lentilles appropriées.

## Revendications

1. Installation pour la formation d'un faisceau laser adapté à la séparation isotopique dans une vapeur atomique, cette installation comprenant au moins une chaîne de lasers à colorant avec un étage oscillateur (10) et des étages amplificateurs (12, 14, 16) disposés en série, et des moyens de pompage optique de ces lasers à colorant,
cette installation étant caractérisée par le fait que les moyens de pompage optique des lasers à colorant sont constitués par une pluralité de lasers à matrice solide (50), tous ces lasers fonctionnant en parallèle, en régime d'impulsions de durée inférieure à 100 ns, à une cadence de répétition comprise entre quelques kilohertz et quelques dizaines de kilohertz, à une longueur d'onde située dans le visible et à une puissance moyenne de quelques dizaines de Watts ; des fibres optiques (52) étant prévues pour guider la lumière émise par ces lasers à matrice solide (50) vers les différents étages (10, 12, 14, 16) de la chaîne de lasers à colorant, chaque étage étant ainsi pompé par la lumière provenant de plusieurs lasers à matrice solide.

2. Installation selon la revendication 1, caractérisée par le fait que chaque laser à matrice solide (50) est un laser de type YAG dopé au néodyme, muni de moyens pour doubler la fréquence d'émission.

3. Installation selon la revendication 2, caractérisée par le fait que chaque laser YAG dopé au néodyme est pompé par une lampe à décharge.

4. Installation selon la revendication 2, caractérisée par le fait que chaque laser YAG dopé au néodyme est pompé par des diodes laser.

5. Installation selon la revendication 2, caractérisée par le fait que chaque laser YAG dopé au néodyme comprend des moyens de déclenchement.

6. Installation selon la revendication 1, caractérisée par le fait qu'elle comprend en outre des moyens de multiplexage dans le temps des impulsions lumineuses émises par les lasers à matrice solide.

7. Installation selon les revendications 5 et 6, caractérisée par le fait que les moyens de multiplexage dans le temps des impulsions lumineuses sont des moyens aptes à décaler dans le temps les instants de déclenchement des divers lasers à matrice solide.

8. Installation selon la revendication 7, caractérisée par le fait que les fibres optiques (52) associées à un même étage de la chaîne laser à colorant et guidant des impulsions lumineuses multiplexées dans le temps sont optiquement couplées avec l'ensemble de l'étage.

## Patentansprüche

1. Zur Isotopen-Trennung in einem atomaren Gas geeignete Laserstrahlerzeugungs-Vorrichtung, wobei diese Vorrichtung mindestens eine Kette von Farblasern umfaßt mit einer Oszillatorstufe (10) und Verstärkerstufen (12, 14, 16), die in Serie angeordnet sind, und Geräte zum optischen Pumpen dieser Farblaser,
diese Vorrichtung wird **dadurch gekennzeichnet,**
daß die Geräte zum optischen Pumpen der Farblaser durch eine Vielzahl von Feststofflasern (50) gebildet werden, wobei alle diese Laser parallel arbeiten, im Impulsbetrieb von kürzerer Dauer als 100 ns, bei einer Impulsfolge, die zwischen einigen Kilohertz und einigen Zehner Kilohertz eingeschlossen ist, bei einer Wellenlänge, die im sichtbaren Bereich angeordnet ist und einer mittleren Leistung von einigen Zehner Watt; Lichtleitfasern (52), welche vorgesehen sind, um das von diesen Feststofflasern (50) emittierte Licht auf die verschiedenen Stufen (10, 12, 14, 16) der Kette der Farblaser zu leiten, wobei also jede Stufe mit Licht gepumpt wird, das von mehreren Feststofflasern stammt.

2. Vorrichtung gemäß Anspruch 1, dadurch gekennzeichnet, daß jeder Feststofflaser (50) ein mit Neodym dotierter Laser vom Typ YAG ist, der mit Geräten ausgestattet ist, um die Emissionsfrequenz zu verdoppeln.

3. Vorrichtung gemäß Anspruch 2, dadurch gekennzeichnet, daß jeder mit Neodym dotiert YAG Laser durch eine Entladungslampe gepumpt wird.

4. Vorrichtung gemäß Anspruch 2, dadurch gekennzeichnet, daß jeder mit Neodym dotierte YAG Laser durch Laserdioden gepumpt wird.

5. Vorrichtung gemäß Anspruch 2, dadurch gekennzeichnet, daß jeder mit Neodym dotierte YAG Laser Geräte zur Auskopplung umfaßt.

6. Vorrichtung gemäß Anspruch 1, dadurch gekennzeichnet, daß sie außerdem Geräte zum Multiplexieren in den Impulszeiten des durch die Feststofflaser emittierten Lichts umfaßt.

7. Vorrichtung gemäß den Ansprüchen 5 und 6, dadurch gekennzeichnet, daß die Geräte zur Multiplexierung in den Lichtimpulszeiten Geräte sind, die fähig sind, in den Zeiten des Auskopplungsmoments verschiedener Feststofflaser stufenweise abzusetzen.

8. Vorrichtung gemäß Anspruch 7, dadurch gekennzeichnet, daß die Lichtleitfasern (52), die mit derselben Stufe der Kette von Farblasern verbunden sind und in der Zeit multiplexierte Lichtimpulse leiten, optisch mit der Stufeneinheit gekoppelt sind.

## Claims

1. Installation for the formation of a laser beam suitable for isotope separation in an atomic vapour, said installation comprising at least one dye laser chain with an oscillator stage (10) and amplifier stages (12, 14, 16) arranged in series, as well as optical pumping means for said dye lasers, said installation being characterized in that the dye laser optical pumping means are constituted by a plurality of solid matrix lasers (50), all these lasers operating in parallel, with pulses lasting less than 100 ns, at a repetition rate between a few kilohertz and a few dozen kilohertz, at a wavelength in the visible range and at an average power of a few dozen Watts, optical fibres (52) being provided for guiding the light emitted by said solid matrix lasers (50) to the different stages (10, 12, 14, 16) of the dye laser chain, each stage thus being pumped by the light from several solid matrix lasers.

2. Installation according to claim 1, characterized in that each solid matrix laser (50) is a neodymium-doped YAG-type laser provided with means for doubling the emission frequency.

3. Installation according to claim 2, characterized in that each neodymium-doped YAG laser is pumped by a discharge lamp.

4. Installation according to claim 2, characterized in that each neodymium-doped YAG laser is pumped by laser diodes.

5. Installation according to claim 2, characterized in that each neodymium-doped YAG laser comprises Q-switches.

6. Installation according to claim 1, characterized in that it also comprises means for the time multiplexing of the light pulses emitted by the solid matrix lasers.

7. Installation according to claims 5 and 6, characterized in that the means for the time multiplexing of the light pulses are means able to time-delay the switching times of the various solid matrix lasers.

8. Installation according to claim 7, characterized in that the optical fibres (52) associated with the same stage of the dye laser chain and guiding the time-multiplexed light pulses are optically coupled to the complete stage.
